# EUROPÄISCHE PATENTANMELDUNG

(11) **EP 4 825 769 A1**
(43) Veröffentlichungstag der Anmeldung: **21.10.2026**
(21) Anmeldenummer: 26166167.2
(22) Anmeldetag: 19.03.2026
(51) Int. Cl.: B65G 47/91, B25J 19/00

(54) **SCHLAUCHHEBER MIT LUFTVERDRÄNGEREINRICHTUNG IM HUBSCHLAUCH**

(30) Priorität: 14.04.2025 DE 102025114517
(71) Anmelder: J. Schmalz GmbH, 72293 Glatten (DE)
(72) Erfinder: Gauß, Jan, 72202 Nagold (DE); Paul, Norman, 78727 Oberndorf am Neckar (DE)
(74) Vertreter: DREISS Patentanwälte PartG mbB

(57) **Zusammenfassung**

Die Erfindung betrifft einen Schlauchheber (10), umfassend einen sich entlang einer Hubschlauch-Längsrichtung (14) erstreckenden Hubschlauch (12), welcher einen Schlauchinnenraum (20) mit einem Schlauchvolumen begrenzt, wobei der Hubschlauch ausgehend von einer ausgezogenen Konfiguration durch Beaufschlagung des Schlauchinnenraums mit Unterdruck in eine eingezogene Konfiguration verkürzbar und durch Belüften des Schlauchinnenraums (20) wieder die ausgezogene Konfiguration verlängerbar ist, und umfassend eine in dem Schlauchinnenraum des Hubschlauchs angeordnete Luftverdrängereinrichtung (36) mit wenigstens einem Füllkörper (38), wobei die Luftverdrängereinrichtung (36) mindestens 15% des Schlauchvolumens in der ausgezogenen Konfiguration des Hubschlauchs ausfüllt.

## Beschreibung

Die Erfindung betrifft einen Schlauchheber, umfassend einen Hubschlauch, welcher durch Beaufschlagung des Schlauchinnenraums mit Unterdruck verkürzbar und durch Belüften des Schlauchinnenraums wieder verlängerbar ist.

Schlauchheber sind in vielfältiger Weise aus dem Stand der Technik bekannt, bspw. aus DE 10 2008 028 205 C5, DE 20 2018 100 403 U1, DE 10 2023 102 438 B3 und DE 10 2023 117 475 A1.

Schlauchheber sind Unterdruck-Handhabungsvorrichtungen mit welchen Lasten mit Hilfe von Unterdruck angehoben, gegebenenfalls verlagert und wieder abgesetzt werden können. Die Hubkraft wird mittels eines Hubschlauchs ausgeübt, der durch Beaufschlagung seines Schlauchinnenraums mit Unterdruck verkürzbar und durch Abbau des in ihm herrschenden Unterdrucks wieder verlängerbar ist. An einem Ende des Hubschlauchs ist üblicherweise ein Endeffektor zum Greifen eines Gegenstands angeordnet.

Um den Hubschlauch und/oder den Endeffektor zu bedienen, ist zwischen Hubschlauch und Endeffektor üblicherweise eine Bedienvorrichtung vorgesehen, welche einen Bediengriff zum Verlagern des Hubschlauchs aufweist. In der Bedienvorrichtung ist in der Regel ein über Schalter oder Taster bedienbares Belüftungsventil integriert, mittels dessen der Schlauchinnenraum des Hubschlauchs bei Bedarf belüftet und somit in seiner Länge verändert werden kann.

Der Hubschlauch weist üblicherweise einen Schlauch aus einem Textilmaterial und eine das Textilmaterial aufspannende Feder, insbesondere Spiralfeder, auf.

Im Betrieb ist der Hubschlauch in Abhängigkeit eines Druckniveaus im Schlauchinnenraum zwischen einer langen Konfiguration, in welcher der Hubschlauch maximal ausgezogen ist (Textilmaterial gespannt), und einer kurzen Konfiguration, in welcher der Hubschlauch maximal eingezogen ist (Textilmaterial gefaltet und Feder auf Block), verstellbar.

Die Erfindung beschäftigt sich mit der Aufgabe bei Schlauchhebern der eingangs genannten Art, auf einfache und kostengünstige Weise eine Bedienung und einen effizienten Betrieb zu verbessern.

Diese Aufgabe wird erfindungsgemäß durch eine Bedienvorrichtung mit den Merkmalen des Anspruchs 1 gelöst.

Der Schlauchheber weist einen Hubschlauch auf. Der Hubschlauch erstreckt sich vorzugsweise entlang einer Hubschlauch-Längsrichtung zwischen einem ersten, insbesondere oberen, Ende, und einem zweiten, insbesondere unteren, Ende. Das erste Ende ist insbesondere ein Befestigungsende des Hubschlauchs. Vorzugsweise ist der Hubschlauch an dem ersten Ende mit einem Träger oder Manipulator verbunden, insbesondere sodass der Hubschlauch in Schwerkraftrichtung an dem Träger oder Manipulator hängt. An dem zweiten Ende kann insbesondere eine Bedienvorrichtung und/oder ein Endeffektor angeordnet sein.

Der Hubschlauch begrenzt einen Schlauchinnenraum. Der Schlauchinnenraum weist ein Schlauchvolumen auf. Der Hubschlauch ist insbesondere durch Beaufschlagung des Schlauchinnenraums mit Unterdruck verkürzbar (wodurch das Schlauchvolumen verringert wird) und durch Belüften des Schlauchinnenraums (also durch Einströmen von Luft, insbesondere Umgebungsluft, in den Schlauchinnenraum) wieder verlängerbar (wodurch das Schlauchvolumen vergrößert wird). Der Hubschlauch kann einen Schlauch aus einem Textilmaterial und eine das Textilmaterial aufspannende Feder, insbesondere Spiralfeder, aufweisen.

Der Hubschlauch kann eine ausgezogene (lange) Konfiguration einnehmen, in welcher der Hubschlauch entlang der Hubschlauch-Längsrichtung maximal ausgezogen ist. In der langen Konfiguration ist das Schlauchvolumen (d.h. das Volumen des Schlauchinnenraums) insbesondere maximal. Die ausgezogene Konfiguration ist insbesondere durch eine Länge des Schlauchs aus dem Textilmaterial definiert. Der Hubschlauch ist ausgehend von der ausgezogenen Konfiguration durch Beaufschlagung des Schlauchinnenraums mit Unterdruck - unter Verringerung des Schlauchvolumens - in eine eingezogene (kurze) Konfiguration überführbar (verkürzbar). Der Hubschlauch ist insbesondere durch Belüften des Schlauchinnenraums aus der eingezogenen Konfiguration wieder in die ausgezogene Konfiguration überführbar. In der eingezogenen Konfiguration ist der Hubschlauch insbesondere entlang der Hubschlauch-Längsrichtung maximal eingezogen. In der eingezogenen Konfiguration ist das Schlauchvolumen des Hubschlauchs geringer als in der ausgezogenen Konfiguration, vorzugsweise minimal. Die ausgezogene Konfiguration und die eingezogene Konfiguration sind insbesondere Endstellungen des Hubschlauchs. Vorzugsweise beträgt das Schlauchvolumen des Hubschlauchs in der eingezogenen Konfiguration 15-50%, vorzugsweise 20-40%, des Schlauchvolumens des Hubschlauchs in der ausgezogenen Konfiguration.

Der Schlauchheber weist außerdem eine Luftverdrängereinrichtung auf. Die Luftverdrängereinrichtung ist in dem Schlauchinnenraum des Hubschlauchs angeordnet. Die Luftverdrängereinrichtung ist insbesondere dazu ausgebildet, ein freies Volumen des Schlauchinnenraums zu reduzieren. Die Luftverdrängereinrichtung kann auch als Verdrängereinrichtung oder Fülleinrichtung bezeichnet werden. Unter "freiem Volumen" des Schlauchinnenraum wird vorliegend insbesondere das mit Luft gefüllte oder füllbare Volumen des Schlauchinnenraums verstanden.

Die Luftverdrängereinrichtung weist einen oder mehrere Füllkörper auf. Bei der Luftverdrängereinrichtung kann es sich insofern um eine Sachgesamtheit aus mehreren Einheiten handeln. Der Füllkörper kann auch als Verdrängerkörper bezeichnet werden.

Vorzugsweise füllt die Luftverdrängereinrichtung, insbesondere der Füllkörper oder die Füllkörper in Summe, mindestens 15%, vorzugsweise mindestens 20%, weiter vorzugsweise mindestens 25%, des Schlauchvolumens des Schlauchinnenraums in der ausgezogenen Konfiguration aus.

Vorzugsweise füllt die Luftverdrängereinrichtung, insbesondere der Füllkörper oder die Füllkörper in Summe, mindestens 30%, vorzugsweise mindestens 50%, weiter vorzugsweise mindestens 60%, weiter vorzugsweise mindestens 70%, weiter vorzugsweise mindestens 80%, des Schlauchvolumens in der eingezogenen Konfiguration aus. Bei manchen Ausgestaltungen ist es auch denkbar, dass die Luftverdrängereinrichtung mehr als 95%, vorzugsweise mehr als 99%, des Schlauchvolumens in der eingezogenen Konfiguration ausfüllt.

Durch die erfindungsgemäße Ausgestaltung mit Luftverdrängereinrichtung wird ein freies Volumen des Hubschlauchs reduziert. Insbesondere ist im Vergleich zu den bekannten Schlauchhebern in der eingezogenen Konfiguration ein freies Volumen und somit ein "Totvolumen" signifikant reduziert. Es hat sich herausgestellt, dass hierdurch gegenüber den bekannten Schlauchhebern eine Hub-Geschwindigkeit des Hubschlauchs signifikant erhöht werden kann. Dies begünstigt einerseits eine schnellere Handhabung, andererseits kann gegenüber den bekannten Lösungen bei gleichbleibender Hub-Geschwindigkeit eine erforderliche Absaugleistung reduziert werden und somit eine Unterdruckerzeugungseinrichtung, bspw. Gebläse, kleiner dimensioniert werden, was einen energieeffizienten Betrieb des Schlauchhebers begünstigt. Im Rahmen der Erfindung hat sich zudem herausgestellt, dass durch die Verwendung einer erfindungsgemäßen Luftverdrängereinrichtung der Hubschlauch nicht nur schneller, sondern auch wesentlich präziser und direkter ansteuerbar ist. Insbesondere wurde festgestellt, dass der Hubschlauchs sehr viel direkter auf eine Veränderung einer Belüftung des Schlauchinnenraums, bspw. in Folge einer Betätigung eines optionalen Belüftungsventils, reagiert. Dies wird darauf zurückgeführt, dass durch das reduzierte Totvolumen auch eine Totzeit zwischen Bedienervorgabe (bspw. Öffnen oder Schließen des Belüftungsventils) und Reaktion des Hubschlauchs deutlich reduziert ist. Die vorgeschlagene Lösung ist zudem kostengünstig umsetzbar, da die Luftverdrängereinrichtung "passiv" arbeitet und insbesondere keine aufwändige Regelung der Unterdruckversorgung erforderlich ist. Zudem ermöglicht es die vorgeschlagene Lösung, auch bei bestehenden Schlauchhebern eine Bedienung zu verbessern, in dem diese mit einer erfindungsgemäßen Luftverdrängereinrichtung nachgerüstet werden.

Der Schlauchheber weist vorzugsweise eine Belüftungseinrichtung, insbesondere Belüftungsventil, zum Belüften des Schlauchinnenraums auf.

Die Luftverdrängereinrichtung kann nur einen einzelnen Füllkörper aufweisen. Die Luftverdrängereinrichtung kann auch zwei oder mehr Füllkörper aufweisen. Die Luftverdrängereinrichtung kann auch eine Vielzahl, insbesondere mehr als zehn, vorzugsweise mehr als 50 Füllkörper, aufweisen.

Im Rahmen einer ersten vorteilhaften Realisierungsform kann die Luftverdrängereinrichtung einen oder mehrere, insbesondere zwei oder drei, vergleichsweise große Füllkörper aufweisen. Insbesondere weist die Luftverdrängereinrichtung gemäß der ersten Realisierungsform weniger als zehn, vorzugsweise weniger als fünf, Füllkörper auf.

Es kann sich als vorteilhaft erweisen, wenn der Füllkörper oder die Füllkörper jeweils 15 bis 50%, vorzugsweise 20 bis 40%, des Schlauchvolumens in der ausgezogenen Konfiguration ausfüllen.

Es kann sich als vorteilhaft erweisen, wenn sich der Füllkörper oder zumindest einer der Füllkörper über mindestens 10%, insbesondere mindestens 15%, und maximal 65%, insbesondere maximal 50%, weiter insbesondere maximal 30%, einer Längserstreckung des Hubschlauchs entlang der Hubschlauch-Längsrichtung in der ausgezogenen Konfiguration erstreckt. Insofern kann eine Länge des Füllkörpers oder zumindest eines der Füllkörper entlang der Hubschlauch-Längsrichtung zwischen 10 und 65%, insbesondere zwischen 15 und 50 %, weiter insbesondere zwischen 20 und 40%, einer Länge des Hubschlauchs in der ausgezogenen Konfiguration entsprechen. Eine solche Abmessung hat sich als besonders vorteilhaft herausgestellt, da einerseits eine Flexibilität des Schlauchhebers nur geringfügig beeinträchtigt wird, andererseits aber durch vergleichsweise wenige Füllkörper ein Totvolumen ausreichend reduziert werden, was einen kostengünstigen und konstruktiv einfachen Aufbau begünstigt.

Weiter kann es sich als vorteilhaft erweisen, wenn der Füllkörper oder wenigstens einer der Füllkörper, insbesondere alle Füllkörper, derart ausgebildet und in dem Schlauchinnenraum angeordnet ist, dass zwischen dem Füllkörper und einer Hubschlauchinnenwand des Hubschlauchs ein Zwischenraum, insbesondere Spalt, gebildet ist. Auf diese Weise wird eine Bewegung des Hubschlauchs, insbesondere eine Kontraktion und Verlängerung, nicht durch Reibung beeinträchtigt. Zudem kann der Zwischenraum eine Unterdruckführung bilden, was ein Evakuieren des Schlauchinnenraums begünstigt. Insbesondere berührt der wenigstens eine Füllkörper eine Hubschlauchinnenwand nicht.

Weiter kann es sich als vorteilhaft erweisen, wenn der Füllkörper oder wenigstens einer der Füllkörper, insbesondere alle Füllkörper, wenigstens eine axiale (d.h. entlang der Hubschlauch-Längsrichtung erstreckende), insbesondere zentrale, Durchgangsöffnung, insbesondere Durchgangskanal, aufweist. Beispielsweise kann der Füllkörper als Hohlkörper, insbesondere Hohlzylinder, ausgebildet sein. Der wenigstens eine Durchgangskanal kann insbesondere eine Unterdruckführung bilden. Insbesondere kann der Schlauchinnenraum durch den Füllkörper hindurch evakuiert werden.

Vorzugsweise beträgt ein Durchmesser des Durchgangskanals in dem Füllkörper zwischen 10 und 100 mm, vorzugsweise zwischen 30 und 80 mm, weiter vorzugsweise zwischen 40 und 60 mm.

Weiter kann es sich als vorteilhaft erweisen, wenn der Hubschlauch einen Unterdruckanschluss aufweist, über welchen der Schlauchinnenraum mit Unterdruck versorgbar ist. Bei einer Ausgestaltung des wenigstens einen Füllkörpers mit Durchgangskanal kann es dann vorteilhaft sein, wenn ein Strömungsquerschnitt, insbesondere Durchmesser, des Durchgangskanals in dem wenigstens einen Füllkörper einem Strömungsquerschnitt, insbesondere Durchmesser, des Unterdruckanschlusses ±30%, insbesondere ±10%, entspricht. Auf diese Weise ist eine Evakuierung des Schlauchinnenraums besonders effizient.

Weiter kann es sich als vorteilhaft erweisen, wenn der Füllkörper oder wenigstens einer der Füllkörper, insbesondere alle Füllkörper, mit Durchgangskanal wenigstens eine mit dem axialen Durchgangskanal strömungsverbundene seitliche, insbesondere radiale, Strömungsöffnung aufweist. Die Strömungsöffnung kann insofern einen seitlichen Bypass bilden. Auf diese Weise kann beispielsweise kann für den Fall, dass der Durchgangskanal abschnittsweise versperrt ist, die Luft seitlich abgeleitet werden und insbesondere über den optionalen Zwischenraum zwischen Füllkörper und Hubschlauchinnenwand geführt werden.

Weiter kann es sich als vorteilhaft erweisen, wenn der Füllkörper oder wenigstens einer der Füllkörper, insbesondere alle Füllkörper, - zusätzlich oder alternativ zu einem Durchgangskanal - an seiner Außenseite eine oder mehrere sich axial erstreckende Kanäle, insbesondere in Form von Längsnuten, aufweist. Eine solche Ausgestaltung begünstigt es, Luft entlang einer Außenseite des Füllkörpers zu leiten. Vorzugsweise erstrecken sich die Kanäle, insbesondere Längsnuten, entlang der kompletten Erstreckung des Füllkörpers.

Es ist auch denkbar, dass der wenigstens eine Füllkörper einen blumenförmigen, insbesondere kleeblattförmigen, Querschnitt aufweist. Dies kann eine Strömungsführung an einer Außenseite des Füllkörpers weiter begünstigen.

Vorzugsweise weist die Luftverdrängereinrichtung einen ersten (oberen) Füllkörper auf. Der erste Füllkörper ist insbesondere an einem ersten Ende des Hubschlauchs angeordnet, weiter insbesondere dort befestigt. Das erste Ende ist insbesondere das (in Bezug auf eine Einbaulage des Hubschlauchs) obere Ende des Hubschlauchs, weiter insbesondere das Befestigungsende des Hubschlauchs. Eine Anordnung am oberen Ende hat den Vorteil, dass beim Zusammenziehen des Hubschlauchs (wobei das untere Ende auf das obere Ende zubewegt wird) keine Verlagerung des oberen Füllkörpers erfolgen muss. Insofern muss für den oberen Füllkörper insbesondere keine Hubkraft aufgebracht werden, was sich positiv auf eine Traglast des Schlauchhebers auswirkt. Zudem hat eine Anordnung eines Füllkörpers am oberen Ende des Hubschlauchs den Vorteil, dass eine Flexibilität des Hubschlauchs im unteren Bereich des Hubschlauchs - dort wo üblicherweise die Bedienvorrichtung angeordnet ist - nur geringfügig beeinträchtigt wird. Die vorstehend allgemein beschriebenen Vorteile und vorteilhaften Ausgestaltungen eines Füllkörpers können zur Ausbildung des oberen Füllkörpers dienen.

Weiter kann es sich als vorteilhaft erweisen, wenn die Luftverdrängereinrichtung einen zweiten (unteren) Füllkörper aufweist. Der zweite Füllkörper ist insbesondere an einem zweiten Ende des Hubschlauchs angeordnet, weiter insbesondere dort befestigt. Das zweite Ende ist insbesondere das (in Bezug auf eine Einbaulage des Hubschlauchs) untere Ende des Hubschlauchs. Beispielsweise kann der untere Füllkörper an einer am unteren Ende des Hubschlauchs angeordneten Bedienvorrichtung gehaltert sein, bspw. durch Ein-Stecken, Einpressen, Kleben oder Schrauben. Der untere Füllkörper wird bei einer Kontraktion des Hubschlauchs dann in Richtung des oberen Endes mit bewegt. Die vorstehend allgemein beschriebenen Vorteile und vorteilhaften Ausgestaltungen eines Füllkörpers können zur Ausbildung des unteren Füllkörpers dienen.

Bei manchen Ausgestaltungen kann die Luftverdrängereinrichtung einen ersten, insbesondere oberen, Füllkörper, der an einem ersten, insbesondere oberen, Ende des Hubschlauchs angeordnet ist, und einen zweiten, insbesondere unteren, Füllkörper, der an einem zweiten, insbesondere unteren, Ende des Hubschlauchs angeordnet ist, aufweisen.

Bei manchen Ausgestaltungen kann die Luftverdrängereinrichtung einen ersten, insbesondere oberen, Füllkörper und wenigstens einen weiteren Füllkörper aufweisen, welcher zu dem ersten, insbesondere oberen Füllkörper, axial, d.h. entlang der Hubschlauch-Längsrichtung, versetzt angeordnet ist. Der wenigstens eine weitere Füllkörper ist insbesondere von einem zweiten, insbesondere unteren, Ende des Hubschlauchs beabstandet. Bei Ausgestaltungen mit erstem (oberem) und zweitem (unterem) Füllkörper kann der wenigstens eine weitere Füllkörper insbesondere zwischen ersten und zweiten Füllkörper angeordnet sein. Die vorstehend allgemein beschriebenen Vorteile und vorteilhaften Ausgestaltungen eines Füllkörpers können zur Ausbildung des weiteren Füllkörpers dienen.

Vorzugsweise sind der erste, insbesondere obere, Füllkörper und der wenigstens eine weitere Füllkörper in der ausgezogenen Konfiguration des Hubschlauchs relativ zueinander verlagerbar. Insbesondere können der erste, insbesondere obere, Füllkörper und der wenigstens eine weitere Füllkörper in der ausgezogenen Konfiguration des Hubschlauchs voneinander beabstandet sein. In der eingezogenen Konfiguration des Hubschlauchs liegen der erste, insbesondere obere, Füllkörper und der wenigstens eine weitere Füllkörper vorzugsweise aneinander an.

Vorzugsweise ist der wenigstens eine weitere Füllkörper an dem ersten, insbesondere oberen, Füllkörper gehaltert. Besonders vorteilhaft ist es, wenn der wenigstens eine weitere Füllkörper über eine flexible Verbindung mit dem oberen Füllkörper verbunden ist. Dies ermöglicht eine Relativbewegung der Füllkörper zueinander, was sich positiv auf eine Flexibilität des Hubschlauchs in der eingezogenen Konfiguration auswirkt. Die flexible Verbindung kann insbesondere ein Gummi- oder Textilband umfassen. Insbesondere kann der weitere Füllkörper über ein flexibles Band, insbesondere Textilband oder Gummiband, mit dem ersten Füllkörper verbunden sein. Insbesondere kann der wenigstens eine weitere Füllkörper hängend an dem ersten, insbesondere oberen, Füllkörper gehaltert sein.

Bei einer Ausgestaltung der Füllkörper mit Durchgangskanal ist es beispielsweise auch denkbar, dass der erste, insbesondere obere Füllkörper, und der wenigstens eine weitere Füllkörper über ein durch jeweilige axiale Durchgangskanal der Füllkörper hindurchgeführtes, insbesondere elastisches, Verbindungselement, bspw. in Form eines elastischen Bandes, insbesondere Gummibandes, an einem oberen Ende des Hubschlauchs gehaltert sind.

Bei manchen Ausgestaltungen kann die Luftverdrängereinrichtung einen ersten (oberen) Füllkörper, der an einem ersten (oberen) Ende des Hubschlauchs angeordnet ist, einen zweiten (unteren) Füllkörper, der an einem zweiten (unteren) Ende des Hubschlauchs angeordnet ist, und wenigstens einen weiteren (mittleren) Füllkörper aufweisen, welcher zwischen dem ersten und dem zweiten Füllkörper angeordnet ist.

Bei einer Ausgestaltung der Luftverdrängereinrichtung mit zwei oder mehr Füllkörpern kann es sich als vorteilhaft erweisen, wenn axial benachbarte Füllkörper (bspw. der erste Füllkörper und der weitere Füllkörper oder der weitere Füllkörper und der zweite Füllkörper) in der eingezogenen Konfiguration des Hubschlauchs aneinander anliegen. Auf diese Weise ist eine gewisse Stabilität gewährleistet, welche es insbesondere bei Ausgestaltungen mit Durchgangskanälen in den Füllkörpern erleichtert, die Durchgangskanälen relativ zueinander auszurichten, um eine durchgehende Unterdruckführung durch die Füllkörper bereitzustellen. Insbesondere sind axial benachbarte Füllkörper in der ausgezogenen Konfiguration des Hubschlauchs voneinander beabstandet. Auf diese Weise ist in der ausgezogenen Konfiguration eine Relativbewegung der Füllkörper begünstigt, was sich positiv auf eine Flexibilität des Hubschlauchs auswirkt.

Bei einer Ausgestaltung der Luftverdrängereinrichtung mit zwei oder mehr Füllkörpern kann es sich weiter als vorteilhaft erweisen, wenn zumindest manche der axial benachbarten Füllkörper, insbesondere zumindest der erste und der weitere Füllkörper, an einander zugewandten Seiten jeweils eine, insbesondere zueinander komplementär ausgebildete, Kontaktstruktur aufweisen. Beispielsweise kann bei Ausgestaltungen mit erstem (oberem) und weiterem Füllkörper der erste und der weitere Füllkörper an einander zugewandten Seiten jeweils eine Kontaktstruktur aufweisen. Insbesondere wirken die benachbarten Füllkörper über die Kontaktstrukturen zusammen. Es ist denkbar, dass die benachbarten Füllkörper sowohl in der ausgezogenen Konfiguration als auch in der eingezogenen Konfiguration mit den Kontaktstrukturen aneinander anliegen. Es ist auch denkbar, dass die benachbarten Füllkörper in der ausgezogenen Konfiguration voneinander beabstandet sind, und in der eingezogenen Konfiguration, insbesondere bereits in einer Zwischenkonfiguration zwischen ausgezogener Konfiguration und eingezogener Konfiguration, mit den Kontaktstrukturen aneinander anliegen.

Die Kontaktstrukturen können dazu ausgebildet sein, eine Relativbewegung benachbarter Füllkörper zuzulassen, insbesondere zu führen. Auf diese Weise kann eine kontrollierte Flexibilität auch in der eingezogenen Konfiguration des Hubschlauchs begünstigt werden.

Beispielsweise kann einer der Füllkörper eine konkave Kontaktstruktur und ein benachbarter Füllkörper eine, insbesondere komplementär ausgebildete, konvexe Kontaktstruktur aufweisen, insbesondere in der Art eines Kugelgelenks. Es ist auch denkbar, dass die Kontaktstruktur eines Füllkörpers konisch, kegelförmig, stufenförmig oder nutenförmig ausgebildet ist und die Kontaktstruktur eines benachbarten Füllkörpers hierzu komplementär ausgebildet ist.

Die Kontaktstrukturen können auch dazu ausgebildet sein, eine Relativbewegung benachbarter Füllkörper, insbesondere in der eingezogenen Konfiguration, zu blockieren. Auf diese Weise kann einerseits verhindert werden, dass sich die Füllkörper gegenseitig verklemmen oder einer der Füllkörper seitlich gegen die Hubschlauchinnenwand gedrückt wird und dort mit dem Hubschlauch, z.B. einer Kante an den Falten des Hubschlauches, verhakt, was zu Beschädigungen am Hubschlauch oder einer ruckeligen Verfahrbewegung des Hubschlauchs führen könnte. Insbesondere können die Kontaktstrukturen dazu ausgebildet sein, benachbarte Füllkörper relativ zueinander zu zentrieren. Bei Ausgestaltungen der Füllkörper mit Durchgangskanälen können die Kontaktstrukturen dazu ausgebildet sein, benachbarte Füllkörper derart relativ zueinander zu zentrieren, dass die Durchgangskanäle dieser Füllkörper miteinander überlappen, insbesondere miteinander fluchten.

Weiter kann es sich als vorteilhaft erweisen, wenn der Füllkörper oder wenigstens einer der Füllkörper, insbesondere der zweite (untere) Füllkörper und optional der weitere Füllkörper, zumindest einseitig, insbesondere an einer axialen Stirnseite, eine umlaufende Fase, vorzugsweise mit Fasenwinkel zwischen 30 und 45°, aufweist. Eine solche Ausgestaltung begünstigt ein Abgleiten des Füllkörpers am Hubschlauch. Die umlaufende Fase kann Teil der vorstehend beschriebenen Kontaktstruktur sein oder diese bilden. Es ist auch denkbar, dass der Füllkörper oder wenigstens einer der Füllkörper anstatt einer Fase eine Verrundung aufweist.

Der wenigstens eine Füllkörper kann unterschiedlich ausgebildet sein, insbesondere unterschiedliche Form und Größe aufweisen. Es erweist sich als vorteilhaft, wenn der Füllkörper, insbesondere der erste, zweite und/oder weitere Füllkörper, als Zylinder, vorzugsweise Hohlzylinder, ausgebildet ist. Der Zylinder kann eine runde oder eckige, insbesondere polygonale, Grundfläche aufweisen.

Im Rahmen einer zweiten vorteilhaften Realisierungsform kann die Luftverdrängereinrichtung eine Vielzahl, insbesondere mehr als 10, weiter insbesondere mehr als 20, weiter insbesondere mehr als 50, Füllkörper aufweisen. Insbesondere füllen die Füllkörper dann jeweils maximal 5%, vorzugsweise maximal 2%, des Schlauchvolumens in der eingezogenen Konfiguration aus.

Eine Ausgestaltung mit einer Vielzahl von vergleichsweise kleinen Füllkörpern wirkt sich vorteilhaft auf eine Flexibilität des Hubschlauchs aus. Zudem ist es möglich, dass die Füllkörper ohne weitere Befestigung in dem Hubschlauch angeordnet sind, sich also insbesondere zumindest in der ausgezogenen Konfiguration frei bewegen können.

Es erweist sich als vorteilhaft, wenn ein jeweiliger Durchmesser der Füllkörper zwischen 25% und 50% eines Hubschlauchdurchmessers beträgt. Insbesondere können die Füllkörper jeweils einen minimalen Durchmesser von 40 mm und einen maximalen Durchmesser von 150 mm aufweisen.

Die Füllkörper gemäß der zweiten Realisierungsform sind vorzugsweise als Kunststoffkörper, weiter vorzugweise als Kunststoffkugeln oder Schaumkugeln, ausgebildet.

Es erweist sich als vorteilhaft, wenn eine Anzahl der Füllkörper, insbesondere Kunststoffkugeln, gemäß der zweiten Realisierungsform derart gewählt ist, dass sich die Füllkörper, insbesondere Kunststoffkugeln, in der ausgezogenen Konfiguration relativ zueinander in dem Schlauchinnenraum bewegen können und insbesondere in der eingezogenen Konfiguration zumindest teilweise aneinander anliegen, vorzugsweise dicht gepackt sind. Auf diese Weise wird eine Flexibilität des Hubschlauchs in der ausgezogenen Konfiguration (oder einer Zwischenkonfiguration zwischen ausgezogener und eingezogener Konfiguration) gewährleistet, in der eingezogenen Konfiguration aber eine Totvolumen effektiv reduziert.

Als besonders vorteilhaft hat es sich herausgestellt, wenn der Schlauchinnenraum in der ausgezogenen Konfiguration zu mindestens 15% und maximal 50%, vorzugweise mindestens 20% und maximal 40%, mit Füllkörpern gefüllt ist. Insofern können 15-50%, vorzugsweise 20-40%, des Schlauchvolumens in der ausgezogenen Konfiguration mit Füllkörpern, insbesondere Kunststoffkugeln, gefüllt sein.

Bei der zweiten Realisierungsform kann es sich weiter als vorteilhaft erweisen, wenn der Hubschlauch, insbesondere an einem ersten, insbesondere oberen, Ende, ein luftdurchlässiges Rückhalteelement, insbesondere Gitter, für die Füllkörper, insbesondere Kunststoffkugeln, aufweist. Das Rückhalteelement ist insbesondere dazu ausgebildet, um ein Einsaugen der Füllkörper in einen Unterdruckanschluss des Hubschlauchs zu verhindern.

Im Rahmen eines allgemeinen Aspekts (unabhängig von der Realisierungsform) können bei Ausgestaltungen mit zwei oder mehr Füllkörpern, die Füllkörper faltbar oder ineinander einschiebbar sein.

Im Rahmen eines allgemeinen Aspekts (unabhängig von der Realisierungsform) kann es vorteilhaft sein, wenn der wenigstens eine Füllkörper aus einem, insbesondere vakuumdichten (d.h. nicht porösem), Kunststoffmaterial hergestellt ist. Kunststoffmaterialien sind vergleichsweise leicht, wodurch eine effektive Traglast des Schlauchhebers durch die zusätzlichen Füllkörper nicht signifikant reduziert wird. Vorteilhafte Kunststoffmaterialien umfassen Polystyrol oder geschlossenzelligen Polyurethanschaum. Auch andere Materialien mit vergleichbaren Eigenschaften sind einsetzbar.

Der Schlauchheber umfasst vorzugsweise außerdem eine Bedienvorrichtung zum Bedienen des Schlauchhebers. Die Bedienvorrichtung ist insbesondere an einem (zweiten) unteren Ende des Hubschlauchs, vorzugsweise zwischen Hubschlauch und optionalem Endeffektor, angeordnet. Die Bedienvorrichtung weist insbesondere ein Belüftungsventil zum Belüften Schlauchinnenraums auf. Die Bedienvorrichtung weist insbesondere außerdem einen Bedienmechanismus zum Betätigen des Belüftungsventils auf. Die Bedienvorrichtung kann einen, insbesondere einhändig umgreifbaren, Bediengriff aufweisen.

Der Schlauchheber umfasst vorzugsweise außerdem einen an dem Hubschlauch, insbesondere an der Bedienvorrichtung, befestigten Endeffektor. Vorzugsweise ist der Endeffektor eine Greifvorrichtung, insbesondere Sauggreifvorrichtung. Der Endeffektor ist vorzugsweise durch den Schlauchinnenraum hindurch mit Unterdruck versorgbar. Der Endeffektor kann über die Bedienvorrichtung bedienbar sein.

Der Schlauchheber kann außerdem eine Unterdruckerzeugungseinrichtung, insbesondere Gebläse, zur Versorgung des Schlauchinnenraums mit Unterdruck aufweisen.

Die Erfindung wird im Folgenden anhand der Figuren näher erläutert. Es zeigen:
- Fig. 1A,B: skizzierte Darstellungen einer beispielhaften Ausgestaltung einer Handhabungsanlage umfassend einen Schlauchheber, mit Hubschlauch in ausgezogener Konfiguration (Ansicht A) und in eingezogener Konfiguration (Ansicht B);
- Fig. 2-5: verschiedene beispielhafte Ausgestaltungen eines Füllkörpers;
- Fig. 6A,B: eine skizzierte Darstellung einer weiteren beispielhaften Ausgestaltung eines Schlauchhebers, mit Hubschlauch in ausgezogener Konfiguration (Ansicht A) und in eingezogener Konfiguration (Ansicht B);
- Fig. 7: eine skizzierte Darstellung einer weiteren beispielhaften Ausgestaltung eines Schlauchhebers mit Hubschlauch in ausgezogener Konfiguration;
- Fig. 8: eine skizzierte Darstellung einer weiteren beispielhaften Ausgestaltung eines Schlauchhebers mit Hubschlauch in ausgezogener Konfiguration;
- Fig. 9: eine skizzierte Darstellung einer weiteren beispielhaften Ausgestaltung eines Schlauchhebers mit Hubschlauch in ausgezogener Konfiguration; und
- Fig. 10A,B: skizzierte Darstellungen einer weiteren beispielhaften Ausgestaltung eines Schlauchhebers, mit Hubschlauch in ausgezogener Konfiguration (Ansicht A) und in eingezogener Konfiguration (Ansicht B).

In der nachfolgenden Beschreibung sowie in den Figuren sind für identische oder einander entsprechende Merkmale jeweils dieselben Bezugszeichen verwendet.

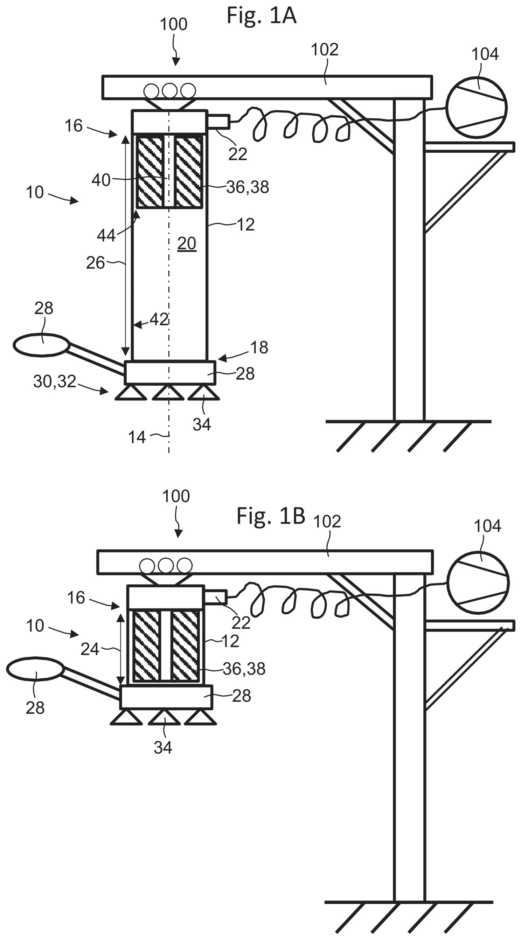

Die Figur 1 zeigt eine Ausgestaltung einer Handhabungsanlage, welche insgesamt mit Bezugszeichen 100 bezeichnet ist. Die Handhabungsanlage weist einen Schlauchheber 10 auf. Der Schlauchheber 10 ist im Beispiel an einem Manipulator 102, beispielhaft in Form eines Säulenschwenkkrans, gehaltert und somit von dem Manipulator 102 verlagerbar.

Die Handhabungsanlage 100 weist außerdem eine Unterdruckerzeugungseinrichtung 104, beispielsweise in Form eines Gebläses, zum Betreiben des Schlauchhebers 10 auf. Die Unterdruckerzeugungseinrichtung 104 kann auch als Teil des Schlauchhebers 10 angesehen werden.

Der Schlauchheber 10 weist einen Hubschlauch 12 auf, welcher sich entlang einer Hubschlauch-Längsrichtung 14 zwischen einem ersten (oberen) Ende 16 und einem zweiten (unteren) Ende 18 erstreckt.

Der Hubschlauch 12 ist im Beispiel an dem oberen Ende 16 an dem Manipulator 102 gehaltert. Bei nicht dargestellten Ausgestaltungen kann der Hubschlauch 12 aber auch an einem Träger, bspw. einem Gerüst oder einer Gebäudedecke, gehaltert sein.

Der Hubschlauch 12 umschließt einen Schlauchinnenraum 20. Der Hubschlauch 12 ist durch Beaufschlagen des Schlauchinnenraums 20 mit Unterdruck entlang der Hubschlauch-Längsrichtung 14 verkürzbar und durch Belüften des Schlauchinnenraums 20 wieder verlängerbar. Je nach Druckniveau im Schlauchinnenraum 20 wird der Hubschlauch 12 insofern reversibel verkürzt oder verlängert sich, z.B. unter der Wirkung der Gewichtskraft.

Im Beispiel weist der Hubschlauch an seinem oberen Ende einen Unterdruckanschluss 22 auf, über welchen der Schlauchinnenraum 20 mit der Unterdruckerzeugungseinrichtung 104 strömungsverbunden ist.

Wie bei einem Vergleich der Figuren 1A und 1B ersichtlich, kann der Hubschlauch 12 zwischen einer maximal ausgezogenen Konfiguration (lange Konfiguration, vgl. Fig. 1A) und einer maximal eingezogenen Konfiguration (kurze Konfiguration, vgl. Fig. 1B), insbesondere stufenlos, verkürzt oder verlängert werden.

Vorzugsweise beträgt eine Längserstreckung 24 des Hubschlauchs 12 in der eingezogenen Konfiguration zwischen 20% und 40% der Längserstreckung 26 des Hubschlauchs 12 in der ausgezogenen Konfiguration.

Um den Schlauchheber 10 zu bedienen, ist eine optionale Bedienvorrichtung 28 vorgesehen. Die Bedienvorrichtung 28 ist an dem unteren Ende 18 des Hubschlauchs 12 gehaltert. Die Bedienvorrichtung 28 weist insbesondere ein Belüftungsventil (nicht dargestellt) zum Belüften des Schlauchinnenraums 20 auf. Derartige Bedienvorrichtungen 28 mit Belüftungsventil sind aus dem Stand der Technik grundsätzlich bekannt und werden daher nicht weiter im Detail beschrieben.

Der Schlauchheber 10 umfasst im dargestellten Beispiel außerdem einen optionalen Endeffektor 30 zum Greifen eines Gegenstandes (nicht dargestellt). Der Endeffektor 30 ist an der Bedienvorrichtung 28 gehaltert und somit mit dem Hubschlauch 12 verbunden. Durch Verkürzen des Hubschlauches 12 kann der Endeffektor 30 und somit ein von dem Endeffektor 30 gegriffener Gegenstand angehoben werden.

Beispielhaft und bevorzugt ist der Endeffektor 30 als Sauggreifvorrichtung 32 zum Ansaugen eines Gegenstands ausgebildet (in Fig. 1A durch die Saugkörper 34 angedeutet). Der Endeffektor 30 ist vorzugsweise durch den Schlauchinnenraum 20 des Hubschlauchs 12 hindurch mit Unterdruck versorgbar (grundsätzlich bekannt und daher nicht im Detail beschrieben). Bei nicht dargestellten Ausgestaltungen kann der Endeffektor 30 aber auch bspw. als Haken oder mechanischer Greifer ausgebildet sein.

Wie in Figur 1A schematisch eingezeichnet, ist in dem Schlauchinnenraum 20 eine Luftverdrängereinrichtung 36 angeordnet, welche ein freies Volumen des Schlauchinnenraums 20 reduziert.

Im Beispiel gemäß Figuren 1A und 1B weist die Luftverdrängereinrichtung 36 einen Füllkörper 38 auf. Der Füllkörper 38 ist an dem oberen Ende 16 des Hubschlauchs 12 angeordnet.

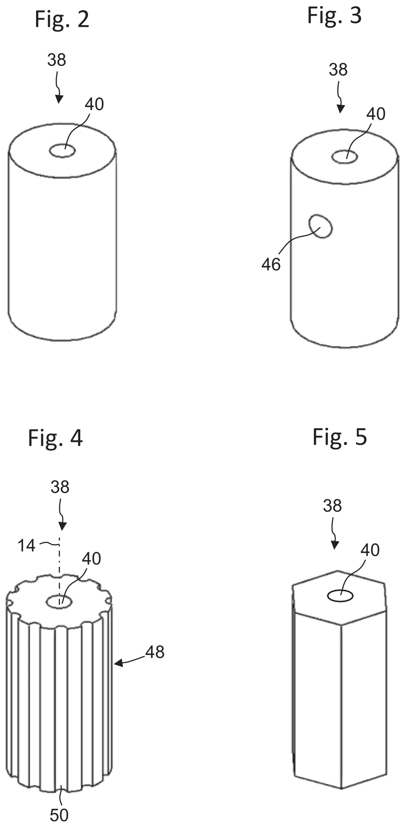

Der Füllkörper 38 ist bei der Ausgestaltung gemäß Figur 1 als Hohlzylinder ausgebildet (vgl. auch Figur 2), welcher einen optionalen zentralen Durchgangskanal 40 aufweist. Der Durchgangskanal 40 dient insbesondere als Unterdruckführung bzw. Strömungskanal durch welche Luft aus dem Schlauchinnenraum 20 in Richtung Unterdruckanschluss 22 abgesaugt werden kann.

Beispielhaft ist ein Strömungsquerschnitt des Durchgangskanals 32 und ein Strömungsquerschnitt des Unterdruckanschlusses 18 im Wesentlich gleich.

Der Füllkörper 38 ist im Beispiel derart bemessen, dass zwischen Füllkörper 38 und einer Hubschlauchinnenwand 42 ein Zwischenraum 44 ausgebildet ist. Der Zwischenraum 44 kann - alternativ oder zusätzlich zu den Durchgangskanal 40 - als Unterdruckführung dienen.

Wie aus Figur 1A ersichtlich, erstreckt sich der Füllkörper 38 im Beispiel derart entlang der Hubschlauch-Längsrichtung 14, dass in der eingezogenen Konfiguration des Hubschlauch 12 zwischen 70 und 90% des Schlauchvolumens durch den Füllkörper 38 ausgefüllt sind.

Der Füllkörper 38 ist vorzugsweise aus einem Kunststoffmaterial, insbesondere Polystyrol oder geschlossenzelliger Polyurethanschaum, ausgebildet.

Die Figuren 3 bis 5 zweigen weitere beispielhafte Ausgestaltungen eines Füllkörpers 38.

Die Figur 3 zeigt beispielsweise eine Ausgestaltung eines Füllkörpers 38, bei welcher der axiale Durchgangskanal 40 eine seitliche Strömungsöffnung 46 aufweist.

Die Figur 4 zeigt eine weitere Ausgestaltung eines Füllkörpers 38, welcher zusätzlich zu dem axialen Durchgangskanal 40 an einer Außenseite 48 eine Mehrzahl von Längsnuten 50 aufweist. Die Längsnuten 50 sind insbesondere entlang eines Umfangs um den Füllkörper 38 verteilt angeordnet. Die Längsnuten 50 können insbesondere als Strömungskanäle zur Leitung von Luft /Unterdruck zwischen Füllkörper 38 und Hubschlauchinnenwand 42 dienen.

Die Figur 5 zeigt eine weitere beispielhafte Ausgestaltung eines Füllkörpers 38, welcher eine polygonale, im Beispiel 6-eckige, Grundfläche aufweist.

Während in den Figuren die Füllkörper 38 jeweils mit axialem Durchgangskanal 40 gezeigt sind, ist es bei nicht dargestellten Ausgestaltungen auch denkbar, dass der Füllkörper 38 keinen axiale Durchgangskanal 40 aufweist.

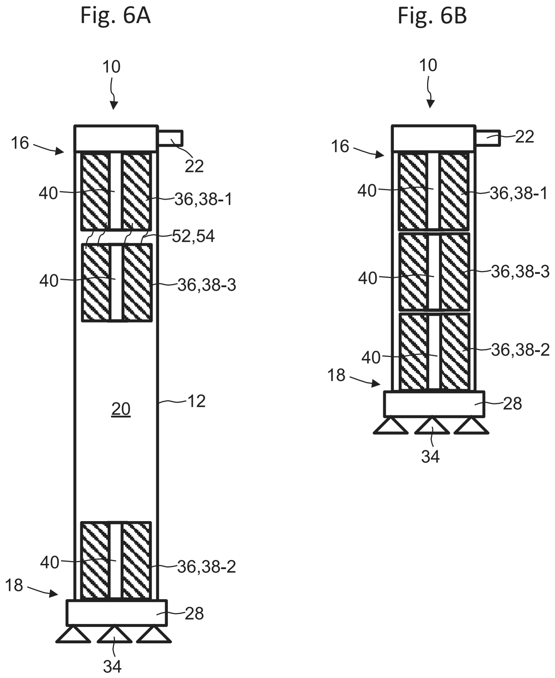

Die Figuren 6A und 6B zeigen eine weitere Ausgestaltung eines Schlauchhebers 10, welcher sich von dem Schlauchheber 10 gemäß Figuren 1A und 1B dadurch unterscheidet, dass die Luftverdrängereinrichtung 36 drei Füllkörper 38-1, 38-2, 38-3 aufweist, welche zueinander axial versetzt angeordnet sind.

Im Konkreten ist in dem Schlauchinnenraum 20 ein oberer (erster) Füllkörper 38-1 angeordnet, welcher an dem oberen Ende 16 des Hubschlauchs 12 befestigt ist. Darüber hinaus ist in dem Schlauchinnenraum 20 ein unterer (zweiter) Füllkörper 38-2 angeordnet, welcher an dem unteren Ende 18 des Hubschlauchs 12 angeordnet ist.

Zwischen oberem und unterem Füllkörper 38-1, 38-2 ist ein weiterer (dritter) Füllkörper 38-3 angeordnet. Wie in Figur 6A angedeutet, ist der weitere Füllkörper 38-3 an dem oberen Füllkörper 38-1 über eine Verbindungseinrichtung 52 gehaltert. Vorzugsweise ist der weitere Füllkörper 38-3 über ein oder mehrere flexible Verbindungen 54, insbesondere in Form von Textil- oder Gummibändern, mit dem oberen Füllkörper 38-1 verbunden.

Wie aus Figur 6A ersichtlich, sind die Füllkörper 38-1, 38-2, 38-3 in der ausgezogenen Konfiguration des Hubschlauchs 12 voneinander beabstandet. Durch die flexible Verbindung zwischen oberem Füllkörper 38-1 und mittlerem Füllkörper 38-3 ist eine Relativbewegung beider Füllkörper 38-1, 38-3 ermöglicht.

Wie aus Figur 6B ersichtlich, sind die Füllkörper 38-1, 38-2, 38-3 vorzugsweise derart bemessen, dass benachbarte Füllkörper 38-1, 38-2, 38-3 in der eingezogenen Konfiguration aneinander anliegen.

Vorzugseise füllen die Füllkörper 38-1, 38-2, 38-3 mehr als 70% eines Schlauchvolumens in der eingezogenen Konfiguration aus.

Bei nicht dargestellten Ausgestaltungen ist es auch denkbar, dass der untere Füllkörper 38-2 entfällt. Insofern kann die Luftverdrängereinrichtung 36 nur den oberen Füllkörper 38-1 und den weiteren Füllkörper 38-3 aufweisen.

Bei weiteren, nicht dargestellten Ausgestaltungen ist es auch denkbar, dass der weitere (mittlere) Füllkörper 38-3entfällt. Insofern kann die Luftverdrängereinrichtung 36 nur den oberen Füllkörper 38-1 und den unteren Füllkörper 38-2 aufweisen.

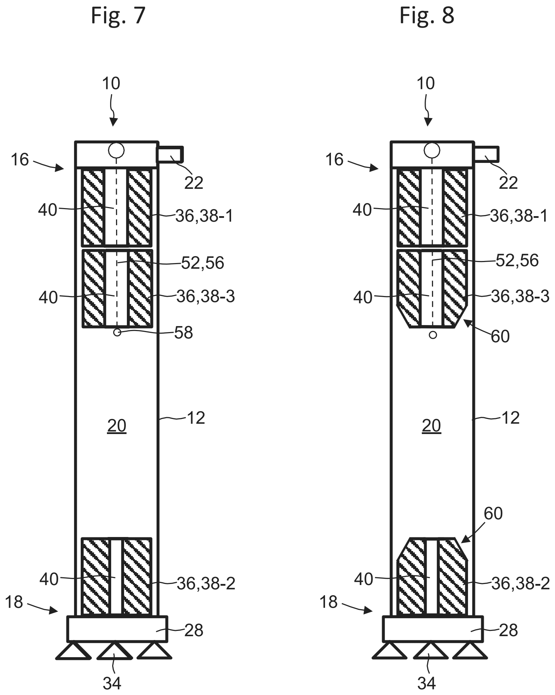

Die Figur 7 zeigt eine weitere Ausgestaltung eines Schlauchhebers 10, welcher sich von dem Schlauchheber 10 gemäß den Figuren 6A und 6B in der Art der Befestigung des oberen Füllkörpers 38-1 und des weiteren Füllkörpers 38-3 unterscheidet.

Im konkreten Beispiel sind der obere Füllkörper 38-1 und der weitere (mittlere) Füllkörper 38-3 über ein, insbesondere vorgespanntes, elastisches Verbindungselement 56 an dem oberen Ende 16 des Hubschlauchs 12 befestigt. Das elastische Verbindungselement 56 erstreckt sich dabei durch die Durchgangskanäle 40 des oberen und des weiteren Füllkörpers 38-1, 38-3.

Das elastische Verbindungselement 56 ist insbesondere einerseits mit dem Hubschlauchende verbunden, bspw. über eine Öse befestigt. Das elastische Verbindungselement 56 ist insbesondere andererseits mit der dem oberen Füllkörper 38-1 abgewandten Seite des weiteren Füllkörpers 38-3 verbunden, bspw. über einen orthogonal zu seiner Erstreckung verlaufenden Stab 58. Beispielhaft kann es sich bei dem elastischen Verbindungselement 56 um ein Gummiband handeln.

Die Figur 8 zeigt eine weitere beispielhafte Ausgestaltung eines Schlauchhebers 10, welcher sich von der Ausgestaltung gemäß Fig. 7 dadurch unterscheidet, dass der weitere Füllkörper 38-3 und der untere Füllkörper 38-2 an den einander zugewandten Seiten jeweils eine umlaufende Fase 60 aufweisen. Wie vorstehend erwähnt, wird hierdurch eine flexible Kontraktion des Hubschlauchs 12 begünstigt.

Bei nicht dargestellten Ausgestaltungen kann auch nur der untere Füllkörper 38-2 oder nur der weitere Füllkörper 38-3 eine solche Fase 60 aufweisen. Es ist auch denkbar, dass der untere Füllkörper 38-2 und der weitere Füllkörper 38-3 unterschiedlich ausgebildete Fasen 60 aufweisen.

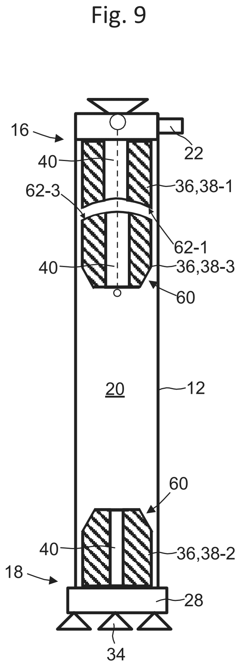

Die Figur 9 zeigt eine weitere beispielhafte Ausgestaltung eines Schlauchhebers 10, welcher sich von der Ausgestaltung gemäß Fig. 8 dadurch unterscheidet, dass der obere Füllkörper 38-1 und der weitere Füllkörper 38-3 an den einander zugewandten Seiten jeweils eine Kontaktstruktur 62-1, 62-3 aufweisen.

Die Kontaktstrukturen 62-1, 62-3 sind zueinander komplementär ausgebildet. Im Beispiel weist der obere Füllkörper 38-1 eine konkave Kontaktstruktur 62-1 und der weitere Füllkörper 38-3 weist eine komplementär ausgebildete konvexe Kontaktstruktur 62-3 auf. Auf diese Weise können die Füllkörper 38-1, 38-3 in der Art eines Kugelgelenks aneinander abgleiten, was eine Flexibilität begünstigt.

Bei nicht dargestellten Ausgestaltungen ist es auch denkbar, dass eine der Kontaktstrukturen 62-1, 62-3 konisch, kegelförmig, stufenförmig oder nutenförmig ausgebildet ist und die andere Kontaktstruktur 62-1, 62-3 komplementär ausgebildet ist.

Im Beispiel gemäß Figur 9 weisen der weitere Füllkörper 38-3 und der untere Füllkörper 38-2 die vorstehend in Bezug auf Fig. 8 erläuterte Fase 60 auf. Bei nicht dargestellten Ausgestaltungen ist es aber auch denkbar, dass nur einer der Füllkörper 38-1, 38-2, 38-3 oder keiner der Füllkörper 38-1, 38-2, 38-3 eine Fase 60 aufweist.

Weiter ist es denkbar, dass die Luftverdrängereinrichtung 36 in Abweichung von den in den Figuren 6A bis 9 gezeigten Beispielen keinen unteren Füllkörper 38-2 aufweist.

In den Darstellungen gemäß Figuren 8 und 9 sind der obere Füllkörper 38-1 und der weitere Füllkörper 38-2 über ein vorstehend in Bezug auf Fig. 7 beschriebenes Verbindungselement 56 miteinander verbunden. Bei nicht dargestellten Ausgestaltungen kann eine Verbindung aber auch auf andere Weise erfolgen, bspw. wie in Bezug auf Fig. 6A erläutert.

Weiter ist es denkbar, dass die Luftverdrängereinrichtung 36 in Abweichung von den in den Figuren 6A bis 9 gezeigten Beispielen mehr als einen weiteren Füllkörper 38-3 aufweist. Die mehreren weiteren Füllkörper 38-3 können dann entlang der Hubschlauch-Längsrichtung 14 zueinander axial versetzt angeordnet sein.

Die in den Figuren 6A bis 9 dargestellten Füllkörper 38-1, 38-2, 38-3 können jede der in den Figuren 2 bis 5 dargestellten sowie der weiteren in diesem Zusammenhang beschriebenen Formen aufweisen.

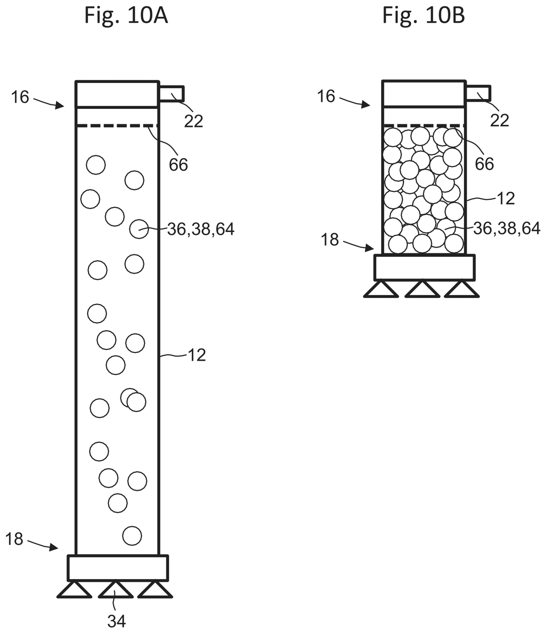

Die Figuren 10A und 10B zeigen eine weitere beispielhafte Ausgestaltung eines Schlauchhebers 10, bei welchem die Luftverdrängereinrichtung 36 ein Vielzahl von (kleineren) Füllkörpern 38 aufweist.

Im konkreten Beispiel ist der Hubschlauch 12 mit einer Vielzahl von kugelförmigen Füllkörpern 38, insbesondere in Form von Kunststoffkugeln 64, gefüllt.

Wie bei einem Vergleich der Figuren 10A und 10B ersichtlich, ist eine Anzahl der Füllkörper 38 vorzugsweise derart gewählt, dass sich die Füllkörper 38 in der ausgezogenen Konfiguration relativ zueinander bewegen können, in der eingezogenen Konfiguration aber zumindest teilweise aneinander anliegen. Auf diese Weise ist in der ausgezogenen Konfiguration eine flexible Handhabung des Hubschlauchs 12 begünstigt, während in der eingezogenen Konfiguration das Totvolumen möglichst weitestgehend ausgefüllt ist.

Als vorteilhaft hat sich herausgestellt, wenn ein Gesamtfüllvolumen der Füllkörper 38 (Kunststoffkugeln 64) etwa 15-50% des Schlauchvolumens in der ausgezogenen Konfiguration entspricht.

Wie aus den Figuren 10A und 10B ersichtlich, ist in dem Schlauchinnenraum 20 im Bereich des oberen Endes 16 ein Rückhalteelement 66, insbesondere in der Form eines Gitters, angeordnet, um ein Einsaugen der Füllkörper 38 (Kunststoffkugeln 64) in den Unterdruckanschluss 22 zu verhindern.

## Patentansprüche

1. Schlauchheber (10), umfassend
- einen sich entlang einer Hubschlauch-Längsrichtung (14) erstreckenden Hubschlauch (12), welcher einen Schlauchinnenraum (20) mit einem Schlauchvolumen begrenzt, wobei der Hubschlauch (12) ausgehend von einer ausgezogenen Konfiguration durch Beaufschlagung des Schlauchinnenraums (20) mit Unterdruck in eine eingezogene Konfiguration verkürzbar und durch Belüften des Schlauchinnenraums (20) wieder die ausgezogene Konfiguration verlängerbar ist,
- eine in dem Schlauchinnenraum (20) des Hubschlauchs (12) angeordnete Luftverdrängereinrichtung (36) mit wenigstens einem Füllkörper (38), wobei die Luftverdrängereinrichtung (36) mindestens 15% des Schlauchvolumens in der ausgezogenen Konfiguration des Hubschlauchs (12) ausfüllt.

2. Schlauchheber (10) nach Anspruch 1, wobei die Luftverdrängereinrichtung (36) mindestens 30%, vorzugsweise mindestens 50%, weiter vorzugsweise mindestens 70% des Schlauchvolumens in der eingezogenen Konfiguration ausfüllt.

3. Schlauchheber (10) nach Anspruch 1 oder 2, wobei eine Längserstreckung des Füllkörpers (38) oder wenigstens eines der Füllkörper (8) entlang der Hubschlauch-Längsrichtung (14) zwischen 10% und 65%, insbesondere zwischen 10% und 50%, einer Länge (26) des Hubschlauchs (12) in der ausgezogenen Konfiguration entspricht.

4. Schlauchheber (10) nach einem der vorherigen Ansprüche, wobei der Füllkörper (38) oder wenigstens einer der Füllkörper (38) derart ausgebildet und in dem Schlauchinnenraum (20) angeordnet ist, dass zwischen dem Füllkörper (38) und einer Hubschlauchinnenwand (42) des Hubschlauchs (12) ein Zwischenraum (44) gebildet ist.

5. Schlauchheber (10) nach einem der vorherigen Ansprüche, wobei der Füllkörper (38) oder wenigstens einer der Füllkörper (38) einen axialen Durchgangskanal (40) aufweist, insbesondere als Hohlzylinder ausgebildet ist.

6. Schlauchheber (10) nach dem vorherigen Anspruch, wobei der Hubschlauch (12) einen Unterdruckanschluss (22) aufweist, über welchen der Schlauchinnenraum (20) mit Unterdruck versorgbar ist, wobei ein Strömungsquerschnitt, insbesondere Durchmesser, des axialen Durchgangskanals (40) einem Strömungsquerschnitt, insbesondere Durchmesser, des Unterdruckanschlusses (22) ±30% entspricht.

7. Schlauchheber (10) nach einem der Ansprüche 5 oder 6, wobei der Füllkörper (38) wenigstens eine mit dem axialen Durchgangskanal (40) strömungsverbundene seitliche Strömungsöffnung (46) aufweist.

8. Schlauchheber (10) nach einem der vorherigen Ansprüche, wobei der Füllkörper (38) oder wenigstens einer der Füllkörper (38) an seiner Außenseite (48) eine oder mehrere, insbesondere entlang eines Umfangs um den Füllkörper (38) verteilt angeordnete, axial erstreckte Kanäle, insbesondere in Form von Nuten (50), aufweist.

9. Schlauchheber (10) nach einem der vorherigen Ansprüche, wobei die Luftverdrängereinrichtung (36) einen ersten, insbesondere oberen, Füllkörper (38-1) aufweist, der an einem ersten, insbesondere oberen, Ende (16) des Hubschlauchs (12) angeordnet ist, und/oder wobei die Luftverdrängereinrichtung (36) einen zweiten, insbesondere unteren, Füllkörper (38-2) aufweist, der an einem zweiten, insbesondere unteren, Ende (18) des Hubschlauchs (12) angeordnet ist.

10. Schlauchheber (10) nach dem vorherigen Anspruch, wobei die Luftverdrängereinrichtung (36) einen, insbesondere zwischen erstem und zweitem Füllkörper (38-1, 38-2) angeordneten, weiteren Füllkörper (38-3) aufweist, welcher zu dem ersten Füllkörper (38-1) axial versetzt angeordnet ist und insbesondere in der ausgezogenen Konfiguration des Hubschlauchs (12) von dem zweiten Ende (18) des Hubschlauchs (12) beabstandet ist.

11. Schlauchheber nach Anspruch 10, wobei der weitere Füllkörper (38-3) über eine flexible Verbindung (52), insbesondere in Form eines Gummi- oder Textilbandes (54), mit dem ersten Füllkörper (38-1) verbunden ist.

12. Schlauchheber (10) nach einem der vorherigen Ansprüche, wobei die Luftverdrängereinrichtung (36) zwei oder mehr Füllkörper (38-1, 38-2, 38-3) aufweist, wobei zumindest manche der axial benachbarten Füllkörper (38-1, 38-2, 38-3) in der eingezogenen Konfiguration des Hubschlauchs (12) aneinander anliegen und an einander zugewandten Seiten jeweils eine, insbesondere zueinander komplementär ausgebildete, Kontaktstruktur (62-1, 62-3) aufweisen, über welche die benachbarten Füllkörper (38-1, 38-3) miteinander wechselwirken, wobei die Kontaktstrukturen (62-1, 62-3) dazu ausgebildet sind, insbesondere in der eingezogenen Konfiguration des Hubschlauchs (12), eine Relativbewegung der benachbarten Füllkörper (38-1, 38-3) zu führen und/oder die benachbarten Füllkörper (38-1, 38-3) relativ zueinander zu zentrieren, insbesondere derart, dass die Durchgangskanäle (40) dieser Füllkörper (38-1, 38-3) einander überlappen, insbesondere miteinander fluchten.

13. Schlauchheber (10) nach einem der Ansprüche 1 oder 2, wobei die Luftverdrängereinrichtung (36) eine Vielzahl von, insbesondere kugelförmigen, Füllkörpern (38), insbesondere Kunststoffkugeln (64) oder Schaumkugeln, aufweist, welche jeweils maximal 5%, insbesondere maximal 2%, eines Schlauchvolumens des Hubschlauchs (12) in der eingezogenen Konfiguration ausfüllen.

14. Schlauchheber (10) nach dem vorherigen Anspruch, wobei eine Anzahl der Füllkörper (38), insbesondere Kunststoffkugeln (64), derart gewählt ist, dass die Füllkörper (38), insbesondere Kunststoffkugeln (64), sich in der ausgezogenen Konfiguration des Hubschlauchs (12) relativ zueinander in dem Schlauchinnenraum (20) bewegen können und in der eingezogenen Konfiguration zumindest teilweise aneinander anliegen, insbesondere dicht gepackt sind.

15. Schlauchheber (10) nach einem der Ansprüche 13 oder 14, wobei 15-50%, vorzugsweise 20-40%, des Schlauchvolumens (20) in der ausgezogenen Konfiguration mit Füllkörpern (38), insbesondere Kunststoffkugeln (64), gefüllt ist.
